(19) Europäisches Patentamt
European Patent Office
Office européen des brevets

(11) EP 4 439 127 A1

## (12) EUROPEAN PATENT APPLICATION

(43) Date of publication:
**02.10.2024 Bulletin 2024/40**

(21) Application number: **24162459.2**

(22) Date of filing: **08.03.2024**

(51) International Patent Classification (IPC):
**G01S 19/32** (2010.01)    **G01S 19/40** (2010.01)

(52) Cooperative Patent Classification (CPC):
**G01S 19/40; G01S 19/32;** G01S 19/072

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023 IT 202300005820**

(71) Applicant: **STMicroelectronics International N.V.**
**1228 Plan-les-Ouates, Geneva (CH)**

(72) Inventors:
• **PALELLA, Nicola Matteo**
  **I-26027 Rivolta d'Adda (Cremona) (IT)**
• **RENNA, Michele**
  **I-83012 Cervinara (Avellino) (IT)**

(74) Representative: **Buzzi, Notaro & Antonielli d'Oulx S.p.A.**
**Corso Vittorio Emmanuele II, 6**
**10123 Torino (IT)**

(54) **A METHOD FOR PERFORMING A CORRECTION OF A IONOSPHERIC ERROR AFFECTING PSEUDO-RANGES MEASUREMENTS IN A GNSS RECEIVER, CORRESPONDING RECEIVER APPARATUS AND COMPUTER PROGRAM PRODUCT**

(57) Method for performing a correction of a ionospheric error affecting pseudo-ranges measurements in a GNSS receiver (100) receiving a plurality of satellite signals $(s_0,...,s_{NS-1})$ from a plurality of satellites $(S_0-S_{NS-1})$ of a constellation of satellites,

comprising in a navigation processing procedure performed at a GNSS receiver (100),

receiving pseudo range measurements $(\rho_k^1, \rho_k^2, \rho_k^5)$ previously calculated by said GNSS receiver (100), obtained from a plurality of carrier signals (L1, L2, L5) in said satellite signals $(s_0,...,s_{NS-1})$,

performing a correction procedure of said pseudo-range measurements $(\rho_k^1, \rho_k^2, \rho_k^5)$, by

calculating (15) ionospheric error correction values $(\hat{\imath}_1^k, \hat{\imath}_2^k, \hat{\imath}_5^k)$ for said pseudo-range measurements $(\rho_k^1, \rho_k^2, \rho_k^5)$ outputting said ionospheric error correction values $(\hat{\imath}_1^k, \hat{\imath}_2^k, \hat{\imath}_5^k)$ on the basis of said pseudo-range measurements $(\rho_k^1, \rho_k^2, \rho_k^5)$,

compensating (13') said pseudo-range measurements $(\rho_k^1, \rho_k^2, \rho_k^5)$ for predictable errors $(c_k^1)$ and for ionospheric error correction values $(\hat{\imath}_1^k, \hat{\imath}_2^k, \hat{\imath}_5^k)$ obtaining corrected pseudo-ranges $(\rho_k^1, \rho_k^2, \rho_k^5)$ and performing a position calculation operation (11, 14') processing said corrected pseudo-range measurements $(\rho_k^1, \rho_k^2, \rho_k^5)$ and outputting position, velocity and time information (PVT) of the GNSS receiver (100),

wherein
said calculating (15) ionospheric error correction values $(\hat{\imath}_1^k, \hat{\imath}_2^k, \hat{\imath}_5^k)$ for said pseudo-range measurements $(\rho_k^1, \rho_k^2, \rho_k^5)$,

comprises
performing (21) a Ionosphere Free Linear Combination on a pair of said pseudo-ranges measurements $(\rho_k^1, \rho_k^5; \rho_k^1, \rho_k^2)$ obtaining a Ionospheric Free Linear Combination pseudo-range measurement $(\rho_k^{15}; \rho_k^{12})$,
obtaining a pair of raw ionospheric error correction values $(\tilde{\imath}_1^k, \tilde{\imath}_5^k; \tilde{\imath}_1^k, \tilde{\imath}_2^k)$, which are result of respective subtraction operations (25, 26), in each of which subtraction a respective of said pseudo-ranges measurements

**(Cont. next page)**

EP 4 439 127 A1

$\left(\rho_k^1, \rho_k^5; \ \rho_k^1, \rho_k^2\right)$ is subtracted from said Ionospheric Free Linear Combination pseudo-range measurement $\left(\rho_k^{15}; \ \rho_k^{12}\right)$,

performing a noise-removing filtering (23) of said raw ionospheric error correction values $\left(\tilde{\iota}_1^k, \ \tilde{\iota}_5^k; \ \tilde{\iota}_1^k, \ \tilde{\iota}_2^k\right)$ obtaining said ionospheric error correction values $\left(\hat{\iota}_1^k, \hat{\iota}_2^k, \ \hat{\iota}_5^k\right)$ input of said operation of compensating (13') said pseudo-range measurements $\left(\rho_k^1, \rho_k^2, \rho_k^5\right)$.

Fig. 4

**Description**

Technical Field

Embodiments of the present disclosure relate to solutions for performing a correction of a ionospheric error affecting pseudo-ranges measurements in a GNSS receiver.

The present disclosure in particular refers to techniques for performing a correction of a ionospheric error affecting pseudo-ranges measurements in a GNSS receiver considering bands L1, L5 or L2.

Background

In several applications and user cases (automotive, consumer fields) a Position Sensor (PS) is required. It is an electronic device composed by a GNSS receiver and a processor aiming to provide accurate position information to user application.

In order to calculate user position, the processor needs to combine the distance measurements (also known as pseudo-ranges) between user and all the satellites in view measured by GNSS receiver following a process called triangulation. Final position accuracy reflects the quality of such measurements. They are affected by several error factors that are compensated successfully in receiver processing according the state of art.

In particular, the GNSS receiver elaborates the elapsed time between satellite signal transmission and reception. This equals the distance between user and satellites (also known as pseudo range). Combining the distance measurements from several satellites through a triangulation technique the GNSS device determines user position accurately. Some errors are present on the distance measurements and they need to be compensated by the receiver in order to preserve position accuracy. They include:

delays introduced by signal generation in satellite HW/SW;
errors due to earth rotation;
delays caused by troposphere;
delays caused by receiver design;
delays caused by ionosphere.

All the error causes listed above, with the exception of signal delays caused by ionosphere, are predictable and compensated into the receiver either using standard modelling techniques or using compensation parameters downloaded by the satellite communication itself.

The signal delays caused by ionosphere crossing is not always predictable. In particular, one critical error factor is the delay accumulated by GNSS signals while crossing the ionosphere layer. The latter are depending on the level of solar activity modulating ionosphere electron content. Hence in certain conditions (daytime, low latitude areas, periods of nonstandard sun activity such like solar storms) the amount of error caused by this is not predictable and affecting the solution. In particular, activity on solar surface charges ionosphere atmospheric layer during daytime, causing an increase of its Total Electron Content (TEC - expressed in electrons/m$^3$). The higher is TEC, the higher is the delay accumulated by electromagnetic signals while crossing it. The higher is the signal carrier frequency, the smaller is such delay, e.g., 1 TEC unit causes 16 cm equivalent error on distance measurement, since a storm can determine an increase of tenth of TEC units, this translates in error of meters.

Dual frequency GNSS receivers can cancel the ionospheric error combining distance measurement taken from two different carriers transmitted by same satellites. However, this kind of combination introduces an additional amount of noise, hence its usage - while improving solution in bad ionospheric conditions - if used in good solar condition is detrimental for performance.

In particular, a first known solution uses Klobuchar/Nequick models. These are generic models implemented into standard receivers. They need to be updated daily with data downloaded by the satellites. They provide a good level of compensation cancelling 50-70% of errors derived in normal solar activity. Klobuchar/Nequick models have the advantage of using all the visible satellites since all of them can be corrected and used, hence maximizing both redundancy and dilution of precision (DOP), but they are conceived as global models, hence providing a compromise, not being optimized for a specific region, while ionospheric conditions vary very much from one continent to another, thus not removing the ionospheric error completely.

A second known solution uses Satellite Based Augmentation Systems (SBAS). On top of classic GNSS constellations (GPS, Galileo, GLONASS, ...) political actors from different area issued specific local satellite systems aiming to gather signal statistics for a given area and elaborated corrections for the ionospheric error tailored for a specific place. By way of example, Europe features the EGNOS satellite system; North America the WAAS system; Japan the QZSS; India the IRNSS. With respect to the Klobuchar/Nequick models, SBAS at least has the advantage to provide ionospheric compensation data that are optimized for the specific geographic area in which the user is located. However, the time granularity of the provided information is still daily at least, meaning that SBAS is not able to cope with non-standard ionospheric behavior caused by abnormal solar activity.

A third solution uses a combination of distance measurements from different broadcasted frequencies. Some GNSS constellations transmit two different signals on different carriers. Receivers that are capable to receive both frequencies can perform a linear combination/difference of the two distance measurements obtained for each satellite. Such combination is known in the art as Ione-Free Linear combination (IFLC) and produces a new distance measurement for given satellite which is free from any ionospheric effect. IFLC is virtually eliminating 100% of ionospheric induced error, however, being a difference, it increases by a fixed amount (e.g., a factor of 1.8) the noise floor of distance measurements. So, while the outliers related to extreme solar activity are removed, the typical accuracy in normal condition is worse than standard methods. Additionally, the difference is influenced by potential other biases present on the measurements. For example, in urban environments, signal reflections caused by tall buildings deteriorate the quality of IFLC measurements. Finally, not all the satellites feature dual frequency transmission; hence there is less availability of such measurements compared to single frequency ones. Moreover, pseudo-range measurements may be halved due to their combination, leading to a worse redundancy and dilution of precision.

Therefore, the prior art solutions present drawbacks, making it difficult to have accurate measurements in every condition.

Summary

In view of the above, it is an objective of the present disclosure to provide solutions which overcome one or more of the above drawbacks.

According to one or more embodiments, one or more of the above objectives is achieved by means of a method having the features specifically set forth in the claims that follow. Embodiments moreover concern a related receiver apparatus and computer program product.

The claims are an integral part of the technical teaching of the disclosure provided herein.

As mentioned before, the present disclosure relates to a method for performing a correction of a ionospheric error affecting pseudo-ranges measurements in a GNSS receiver receiving a plurality of satellite signals from a plurality of satellites of a constellation of satellites,

comprising in a navigation processing procedure performed at a GNSS receiver,
receiving pseudo range measurements previously calculated by such GNSS receiver, obtained from a plurality of carrier signals in such satellite signals,
performing a correction procedure of such pseudo-range measurements, by

calculating ionospheric error correction values for such pseudo-range measurements outputting such ionospheric error correction values on the basis of such pseudo-range measurements,
compensating such pseudo-range measurements for predictable errors and for ionospheric error correction values obtaining corrected pseudo-ranges and
performing a position calculation operation processing such corrected pseudo-range measurements and outputting position, velocity and time information of the GNSS receiver,

wherein

such calculating ionospheric error correction values for such pseudo-range measurements,
comprises

performing a Ionosphere Free Linear Combination on a pair of such pseudo-ranges measurements obtaining a Ionospheric Free Linear Combination pseudo-range measurement,
obtaining a pair of raw ionospheric error correction values, which are result of respective subtraction operations, in each of which subtraction a respective of such pseudo-ranges measurements is subtracted from such Ionospheric Free Linear Combination pseudo-range measurement,
performing a noise-removing filtering of such raw ionospheric error correction values obtaining such ionospheric error correction values input of such operation of compensating such pseudo-range measurements.

In variant embodiments, such noise-removing filtering is a low pass filtering, and comprises calculating a low pass filter constant as a function of the signal strength.

In variant embodiments, such low pass filtering is obtained by an infinite impulse response filtering.

In variant embodiments, in the signal strength ranges are identified a range of higher values and a range of lower values, lower than such higher values, such function yielding higher values of such low pass filter constant when the signal strength lies in the range of higher values and yield lower values, lower than such higher values, when the signal strength lies in the range of lower values.

In variant embodiments, such low pass filter constant is calculated as a function of the signal strength through the scaling of a sigmoid function.

In variant embodiments, during the step for calculating such ionospheric error correction values, at least two carrier signals corresponding to a first band and a second band, are selected in such plurality of carrier signals as set of carrier signals from which identify such pair of such pseudo-ranges measurements.

In variant embodiments, such selecting at least two signals in such plurality of carrier signals comprises selecting at least three carrier signals in such set of carrier signals identifying a first and a second signal among such three carriers signals as pair of signals to obtain such pair of such pseudo-ranges measurements and a third carrier signal, and further comprises the following sequence of operations:

if the second carrier signal is available, the first carrier signal and the second carrier signal are selected as pair of carrier signals,
if the second carrier signal is not available and a third carrier signal corresponding to a third band is available, the first carrier signal and the third carrier signal are selected as pair
if the third and second carrier signal are not available, the corresponding satellite is discarded.

In variant embodiments, the method comprises selecting as the carrier signals which identify such pair of such pseudo-ranges measurements the pseudo-ranges measurements corresponding to the signal carriers that determine the lower noise amplification value in evaluating IFLC pseudo-range measurements.

In variant embodiments, such ionospheric error correction values are estimated for at least three signal carriers corresponding to three bands, in particular GPS bands.

In variant embodiments,

such ionospheric error correction values corresponding to the two selected carrier signals are obtained as output of the low pass filter, and
such ionospheric error correction value corresponding to the not selected carrier signals is derived by the ionospheric error correction value corresponding to the first carrier signals through the corresponding carrier scaling factor.
In variant embodiments, such at least two signals in such plurality of carrier signals selected comprise more than three carrier signals

The present disclosure relates also to a receiver apparatus configured to perform the method of any of the previous embodiments.

In variant embodiments, such receiving pseudo range measurements previously calculated by such GNSS receiver, obtained from a plurality of carrier signals in such satellite signals, such satellite signals comprises GPS band L1 and GPS bands L5 and/or L2.

The present disclosure relates also to a receiver apparatus configured to perform the steps of the method of any of the previous embodiments.

The present disclosure relates also to a computer program product directly loadable into the internal memory of a digital computer, comprising software code portions for performing the steps of the method of any of the previous embodiments.

Brief description of the figures

Embodiments of the present disclosure will now be described with reference to the annexed drawings, which are provided purely by way of non-limiting example and in which:

- Figure 1 is a schematic block diagram showing a GNSS (Global Navigation Satellite System) receiver;
- Figures 2A and 2B are a schematic representation of a block in the receiver of Figure 1 implementing operations of the method here described;
- Figure 3 is a schematic of a block representing operations of the method here described;
- Figure 4 is a schematic of a correction operation performed by the block of figure 3;
- Figures 5A and 5B are detailed schematics of operations performed by the blocks of figure 4.

Detailed Description

In the following description, numerous specific details are given to provide a thorough understanding of embodiments. The embodiments can be practiced without one or several specific details, or with other methods, components, materials, etc. In other instances, well-known structures, materials, or operations are not shown or described in detail to avoid obscuring aspects of the embodiments.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The headings provided herein are for convenience only and do not interpret the scope or meaning of the embodiments.

A navigation receiver operates by down converting to quasi baseband the input signal received from the satellites, which is transmitted at L band (1-2 GHz), using a local oscillator to step down the input frequency and allow a baseband digital management of the Satellite information.

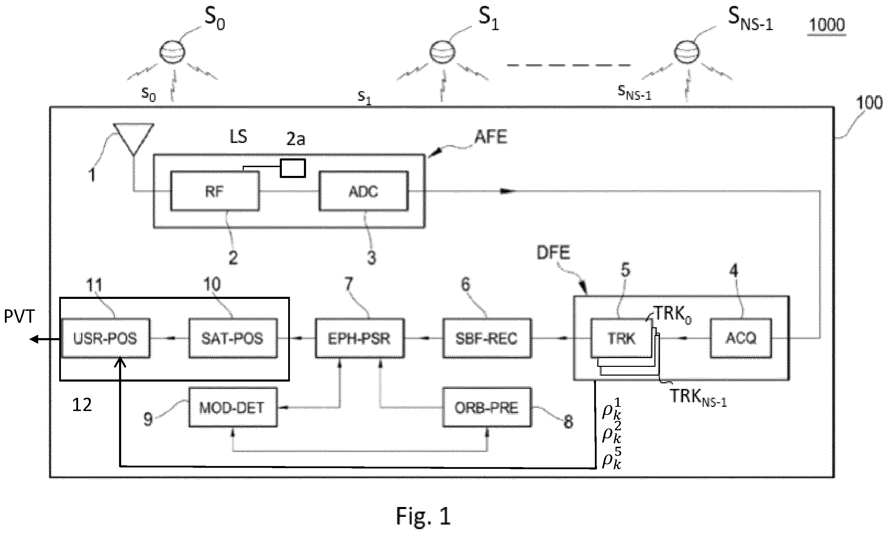

With reference to Figure 1, which diagrammatically shows a GNSS (Global Navigation Satellite System) system 1000 (such as, for example, Global Positioning System (GPS), Global'naya Navigatsionnaya Sputnikovaya Sistema (GLONASS), Galileo System, or other types of satellite-based positioning systems, such global satellite positioning system 1000 comprises a constellation of a number NS of satellites $S_1$-$S_{NS}$ and at least a receiving apparatus 100. The satellite signals used in the GNSS (Global Navigation Satellite System) are of the CDMA-type (Code Division Multiple Access). The satellite signals reception at the receiving apparatus 100 is implemented through the following, sequentially performed, standard steps: analog filtering, frequency conversion and digitization, acquisition, tracking, decoding and positioning.

The receiving apparatus 100 comprises an antenna 1, an analog receiving module AFE (Analog Front End), provided with a radiofrequency (RF) stage 2, and an analog-digital converter 3 (ADC), which can be implemented by hardware modules.

Further, the receiving apparatus 100 comprises a digital processing module DFE (Digital Front End), including an acquisition module 4 (ACQ), and a tracking module 5 (TRK).

Moreover, the receiving apparatus 100 is provided with a sub-frame recovery module (SBF-REC) 6, an ephemerides processing and pseudo-range calculation module 7 (EPH-PSR), a satellites orbits prediction module 8 (ORB-PRE), a satellite type detecting module 9 (MOD-DET), a satellite position calculation module 10 (SAT-POS), and a user position calculation module 11 (USR-POS).

In a particular embodiment, acquisition module 4, tracking module 5 can be implemented by hardware, while the remaining modules 6-11 can be implemented by software. In addition, it is observed that the acquisition module 4 and tracking module 5 can also be implemented by a hardware and software combination.

The receiving apparatus 100 is provided with a central processing unit, memories (mass memory and/or working storage) and respective interfaces (not shown in figures), comprising a microprocessor or microcontroller, for running the software resident in it.

The following embodiments are described in a non-limiting way referring to the GPS technology, however the teachings of the present disclosure can be applied also to other satellite positioning systems.

When the receiving apparatus 100 operates, the antenna 1 receives a plurality of signals $s_0,...,s_{NS-1}$ from one or more satellites $S_0$-$S_{NS-1}$ of the constellation of satellites operating in system 1000. For example, these signals can be modulated on a carrier having a frequency of about 1.5 GHz. Particularly, each received signal transports a pseudo-random code and a message for the data communication.

The pseudo-random code, known as CA code, for example at 1 MHz, is used for distinguishing a satellite from another, and enables the receiving apparatus 100 to measure the time instant at which has been transmitted a signal by a corresponding satellite. Pseudo-random code is implemented by a sequence of pulses, called chips.

The radio frequency stage 2 operates on the signals received by antenna 1 (of the analog type) and converts them to the base band or to an intermediate frequency. Analog-digital converter 3 converts the intermediate frequency signals to corresponding digital signals. The radio-frequency stage 2 operates the conversion at an intermediate frequency using the frequency of a local signal LS which may be supplied by a Temperature Compensated Crystal Oscillator (TCXO) 2a.

The acquisition block 4 identifies in the digital signals originated by the analog-digital converter 3 the satellites in visibility, testing their presence by trying to match their transmitted PRN (Pseudo Random Noise) code sequence, i.e., the CA code, with a corresponding local replica and when a peak confirmation is found it provides the initial GNSS information, i.e., code/frequency information to an elementary Intermediate Frequency tracking correlation block. Further, the acquisition module 4 detects a plurality of parameters associated to the satellites and used for time tracking the satellite. In particular, the acquisition may test a local replica parametrized by a C/A code and over a grid of frequency bins. The actual received frequency may thus be different from nominal carrier due to the local oscillator error and to the relative motion of the user with respect to the satellite relative motion (resulting in the doppler shift).

The data navigation message transports data (for example at a bit rate equal to 50 Hz) and particularly is modulated based on the Binary Phase Shift Keying (BPSK) technique. Further, data navigation message is hierarchically divided in frames and subframes and transports several information, among them a plurality of parameters used for determining the orbit and consequently the position of satellites.

The tracking module 5 has plural tracking channels, indicated by a channel index k from 0 to NS-1, in particular indicated as $TRK_0$ ... $TRK_{NS-1}$ and each is allocated to a different satellite of the constellation. Specifically, the tracking module 5 is configured to operate as carrier tracking loop, which can be designed to follow either the phase of the incoming signal - using Phase Lock Loops (PLL), or the Doppler frequency of the incoming signal using Frequency Lock Loops (FLL). Phase noise, residual fluctuation of the tracking process, is intended as a quality metric and it is adopted to identify the goodness of the tracking itself at a given carrier to noise Cn0.

The tracking module 5 is configured to supply data to the sub-frame recovery module 6, as a time sequence of samples pairs, indicated with {I, Q}. Each sample {I, Q} is for example the result of a coherent integration, respectively in-step and quadrature, of a bit of 20 ms, performed by a correlator based on the modulation technique Binary Phase Shift Keying (BPSK), each samples pair {I, Q} represents a transmitted bit.

Moreover, for each satellite, in the tracking module 5 the Doppler frequency and the transfer time of the GPS signal transmitted by a satellite $S_1$-$S_{NS}$ are determined.

Each k-th tracking channel $TRK_k$ includes thus, in a way known per se, a frequency locked loop and also a carrier to noise ratio meter, which estimates the carrier to noise ratio C/No, for instance every N (e.g., 10) accumulation periods of frequency loop of the tracking channel, where the elementary coherent one is bounded by the bit length of the signal being considered, e.g., of 20 ms for the GPS L1/CA case, and aligned to the 1st millisecond of the bit.

The sub-frame recovery module 6, by means of suitable algorithms, decodes the different received sub-frames forming the navigation data message. In particular, the first elementary decoded unit may correspond to a so called "Word", then many words build a subframe, many subframes a frame, many frames the whole navigation message. The ephemerides processing and pseudo-range calculation module 7 stores the satellite orbit, as ephemerides data.

In the embodiment of figure 1 it is shown that the tracking module 5 performs the calculation of the pseudo ranges, as the difference between time of transmission and time of arrival. Given a certain epoch at the receiver processing, the time of arrival is tagged by local received clock, the time of transmission is given by the tracking code loop. In figure 1 in particular are indicated two pseudo-ranges, a raw pseudo range measurement $\rho_k^1$ from a first carrier signal, in the example L1 carrier signal, for the $k^{th}$ satellite and a raw pseudo range measurement from a second carrier signal, in the example L5 carrier signal, for $k^{th}$ satellite $\rho_k^5$, supplied by module 5 to module 11. By these calculated values, and the time for transferring the GPS signal, the satellite position calculation module 10 calculates the positions of the satellites expressed by 3D coordinates, at the moment of transmission.

The satellite orbit prediction module 8 can be activated for assisting the ephemerides processing and pseudo-range calculation module 7 and/or satellite position calculation module 10 when the ephemerides data are not available at the receiving apparatus 100.

The satellite type detecting module 9 is configured to determine the type of the tracked satellite and by it the solar radiation pressure model to be used in the orbit prediction by the satellite orbit prediction module 8, according to modes that will be described in the following as examples. The satellite type detecting module 9 enables to determine the type of satellite in order to select the solar radiation pressure model which better provides for the shape, mass and size of a satellite.

In this embodiment, the satellite position calculation module 10 operates on the time for transferring the GPS signal together with the reception time (known due to a clock inside the receiving apparatus 100). The satellite position calculation module 10 receives from subframe parameters which describe an arc of satellite orbit. Then, given the current epoch, it selects the point of such arc on which the satellite is currently located, which is described in an XYZ cartesian reference frame, earth centered and earth fixed. Then for each satellite in view, on the basis of the pseudo-ranges assessed by the tracker 5, e.g. $\rho_k^1$ and $\rho_k^5$, sent to the position calculation block 10, given the satellite position XYZ, assessed by the position calculation block 10 itself, such position calculation block, fitting the positions with all the satellites in view with the distance measured for each satellite, calculates the user position (ECEF XYZ) and user clock bias that better accommodate with received input data. This is used then to calculate subsequently the position velocity time PVT.

By a triangulation algorithm, the user position calculation module 11 calculates the position of the receiving apparatus 100 based on the distances of the receiving apparatus 100 preferably from at least four satellites and based on the positions of the same satellites, known at this processing stage. In the following, the position of the receiving apparatus 100 (practically coinciding with the user position) is be called "fix".

Here modules 10 and 11 are indicated as belonging to a navigation processing module 12 which receiving such pseudo range measurements, previously calculated by such GNSS receiver, in particular by module 5, calculate the position velocity time PVT of the receiver. Such pseudo range measurements $\rho_k^1, \rho_k^5$ may pertain a first carrier signal and a second carrier signal, in particular L1 and L5, but even the carrier L2 leading to the pseudo range $\rho_k^2$ can be considered when the carrier L5 is not available. The method here described in variant embodiments may be used with any GNSS band combination. For example, it can be used processing signals from L1 and L2 bands. It is noted that the navigation processing operation may be in general defined in more general schematic as the operation following the tracking channels in module 5, and may include sometimes also the pseudo-range measurements calculation. In the present description, as mentioned is considered as an operation receiving the pseudo-range measurements as input and calculating the position velocity time PVT as output, i.e., it may correspond only to the user module 11 and related operations or it may include additional operations.

As mentioned, the tracking module 5 includes a plurality of channels, i.e., tracking correlation blocks which are usually let working in parallel each tuned on a different satellite PRN code and frequency, among the ones previously identified by the acquisition block 4, with the goal to confirm or eventually discard the acquisition hypothesis for every of them. For the confirmed satellites, after a startup refinement of the code and frequency initially provided by the acquisition block, the stable locked tracking phase starts. It consists into tightly following both the frequency offset (velocity) and the code phase (distance) of the satellite vehicle being analyzed and to demodulate the position and time information embedded in its bit stream. This information is then provided for instance to a Kalman Filter to triangulate the receiver position, e.g., in block 14.

The tracking channel as mentioned includes a correlator which comprises a PRN (pseudorandom noise) delayed sequence generator. The GNSS signals received at the receiver includes a ranging code modulated into the carrier, also called Pseudo-Random Noise (PRN) code, which spreads the spectrum and allows retrieving ranging information. Therefore, it is required that the tracking channel include a PRN delayed sequence generator, which generates PRN sequences which are early, punctual or delayed one with respect to the other to perform correlation with the ranging codes.

The solution here described in brief refers to a method for performing a correction of a ionospheric error affecting pseudo-ranges measurements in a GNSS receiver receiving a plurality of satellite signals from a plurality of satellites of a constellation of satellites,

comprising in a navigation processing procedure performed at a GNSS receiver,
receiving pseudo range measurements previously calculated by such GNSS receiver, obtained from a plurality of carrier signals in such satellite signals,
performing a correction procedure of such pseudo-range measurements, by

calculating ionospheric error correction values for such pseudo-range measurements outputting such ionospheric error correction values on the basis of such pseudo-range measurements,
compensating such pseudo-range measurements for predictable errors and for ionospheric error correction values obtaining corrected pseudo-ranges and
performing a position calculation operation processing such corrected pseudo-range measurements and outputting position, velocity and time information of the GNSS receiver,

wherein

such calculating ionospheric error correction values for such pseudo-range measurements,
comprises

performing a Ionosphere Free Linear Combination on a pair of such pseudo-ranges measurements obtaining a Ionospheric Free Linear Combination pseudo-range measurement,
obtaining a pair of raw ionospheric error correction values, which are result of respective subtraction operations, in each of which subtraction a respective of such pseudo-ranges measurements is subtracted from such Ionospheric Free Linear Combination pseudo-range measurement,
performing a noise-removing filtering of such raw ionospheric error correction values obtaining such ionospheric error correction values input of such operation of compensating such pseudo-range measurements.

Thus, the solution here described evaluates the raw ionospheric errors which, differently from the IFLC pseudo-range measurements and the native pseudo-range measurements, change slowly with time, hence, they can be filtered using a noise-removing filter, in particular a low pass filter, to reduce the noise introduced by the combination of the pseudo-range measurements in the IFLC calculation, obtaining the ionospheric error correction values. In this way, it is possible to precisely remove the ionospheric error from the pseudo-range measurements to obtain accurate estimate of the position, velocity and time information of the GNSS receiver. In fact, since the proposed approach uses IFLC, the ionospheric induced error is virtually eliminated of 100% and it is independent from the user location. Then, the filtering applied on the slowly changing value of the raw ionospheric error reduces consistently the noise introduced by the combination of two GNSS bands. The low pass filtering of the described solution comprises the calculation of a low pass filter constant whose value is expressed as a function of the signal strength. In particular, a weak signal may yield a low or even zero low pass filter constant, which has the effect of leaving the estimated ionospheric errors, i.e., raw ionospheric errors, unchanged, while a strong signal, deemed more reliable and less prone to reflections, may yield a high low pass filter constant, whose effect on the estimate ionospheric errors is more relevant. In this way, the effectiveness of the filtering on the resulting ionospheric errors is weighted according to the strength, and, as a consequence, to the quality of the signal received. Moreover, the solution described, since the correction is performed in real time, can cope with sudden or unpredictable solar activity behavior that could not be managed by standard compensation approaches (e.g., Klobuchar, SBAS) and it does not introduce additional noise when the solar activity operates in normal conditions. In addition, since corrections are applied on all the available measurements among the three pseudo-range ones obtained from the different GPS bands L1, L2 and L5, the satellite redundancy and dilution of precision is comparable with the state-of-the-art solutions using Klobuchar/Nequick models and SBAS.

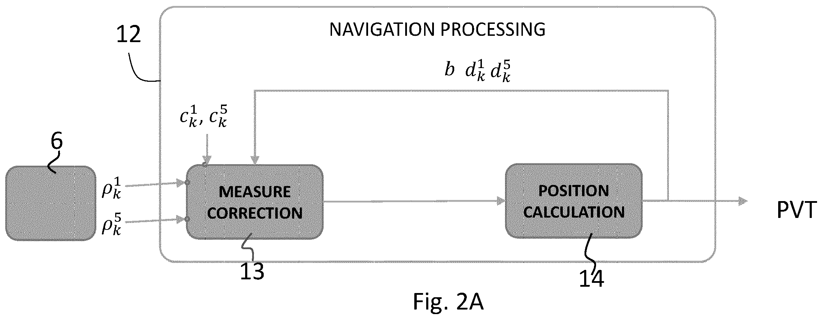

With reference to figure 2A, the navigation processing module 12, receiving the raw pseudo range measurement $\rho_k^1$ from L1 carrier signal for the $k^{th}$ satellite and a raw pseudo range measurement from L5 carrier signal for $k^{th}$ satellite $\rho_k^5$ from block 6, and in general from the GNSS digital signal processing, is here schematized comprising a measurement correction block 13 and a position calculation block 14. They may be for instance both comprised in the user position block 11.

The measurement correction block 13 as such implements an operation receiving pseudo range measurements $\rho_k^1, \rho_k^5$ from the GNSS Digital Signal Processing, in particular from the pseudo-range measurement calculation in block 6, and applying to them corrections $c_k^1, c_k^5$ for predictable errors. Such corrections , $c_k^1, c_k^5$ may be provided by GNSS service operators and downloaded by the satellite signals.

Then, the position calculation block 14 implements an operation taking as input the corrected pseudo-range measurements outputted by block 13, combining them in order to solve the GNSS positioning and time estimation problem, as per equations defined in literature. The most classic and simple method to do this is through a Least Square regression approach; other embodiments may use different state estimation techniques, such, as mentioned above, as Extended Kalman Filters (EKF), or also Particle Filters.

The block 14 calculating the position, velocity, time estimation PVT feeds back some quantities to the correction block 13, i.e., a receiver clock bias b (estimated runtime by position calculation algorithm), a correction $d_k^1$ for receiver band 1 RF delay, a correction for receiver band 5 RF delay $d_k^5$.

Thus, in order to perform the combination in an effective way, both the L1 and L5 pseudo-ranges need to be corrected for Satellite Clock error, tropospheric error and receiver clock error, which is estimated by the position calculation module and it is corresponds to the receiver clock bias b. Moreover the L5 pseudo-ranges need to be compensated for the L1-L5 inter-frequency bias, which is also estimated by position calculation, i.e., it corresponds to correction for receiver band 5 RF delay $d_k^5$.

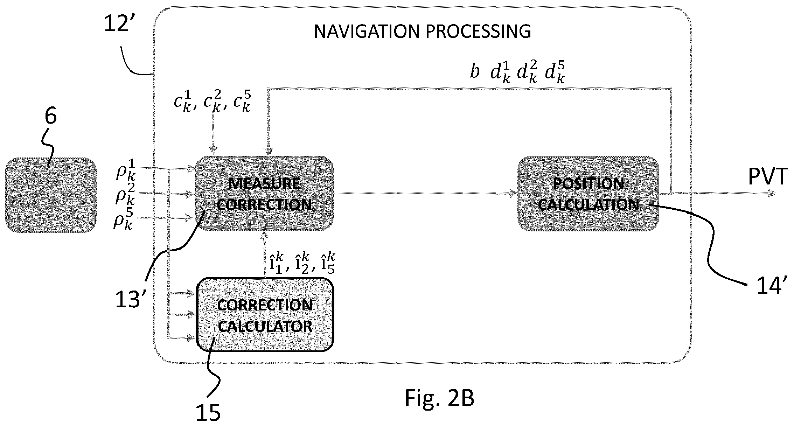

In figure 2A, as mentioned, it is shown a known arrangement of the navigation processing operation 12, while in figure 2B it is schematized an arrangement according to an embodiment of the solution here described 12', which provides a ionospheric error correction calculator 15, which receives as input all the available pseudo-range measurements, in the example $\rho_k^1, \rho_k^2$, and $\rho_k^5$, and it is configured to calculate and provide at its output ionospheric error

correction values $\hat{\imath}_1^k, \hat{\imath}_2^k, \hat{\imath}_5^k$ to a measurement correction block 13', which then is configured to use such values to provide the corrected pseudo-range measurements to the position calculation block 14'. According to the embodiment of the solution here described, the measurement correction block 13' is configured to perform an operation receiving pseudo range measurements, in the exemplary embodiment $\rho_k^1, \rho_k^2$, and $\rho_k^5$, from the GNSS Digital Signal Processing, in particular from the pseudo-range measurement calculation in block 6, and applying to them corrections $c_k^1, c_k^5, c_k^2$

for predictable errors and corrections $\hat{\imath}_1^k, \hat{\imath}_2^k, \hat{\imath}_5^k$ for ionospheric errors. More in particular, in embodiments, there may be three types of corrections:

- $c_k^1, c_k^5, c_k^2$ for predictable errors (eg from ephemeris);

- $\hat{\imath}_1^k, \hat{\imath}_2^k, \hat{\imath}_5^k$ for ionospheric errors estimated with the dual frequency technique here described;

- $b$, $d_k^1, d_k^5$, $d$ for errors which must be estimated as a byproduct of position calculation.

Such corrections $c_k^1, c_k^5, c_k^2$ may be provided by GNSS service operators and downloaded by the satellite signals, while corrections $\hat{\imath}_1^k, \hat{\imath}_2^k, \hat{\imath}_5^k$ are provided by the ionospheric error correction calculator block 15. For the sake of conciseness, since the position calculation block 14' operates as previously described but it is configured to use all the three different bands, L1, L2, and L5, so it will not be illustrated and described in depth here.

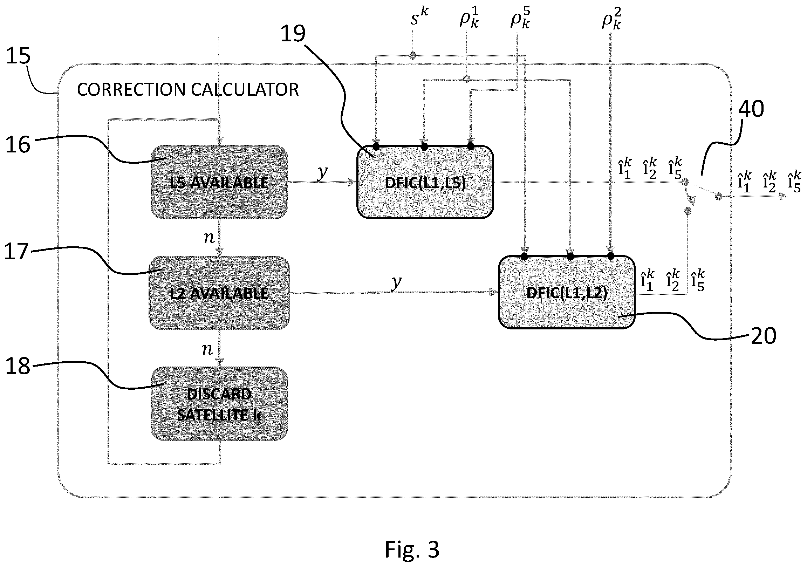

In figure 3 it is shown in more detail the ionospheric error correction calculator 15 whose aim is to manage the dual frequency correction calculation for the three GNSS bands of interest, L1, L2, and L5, depending on available signals. Therefore, such block 15 is composed of a first group of blocks comprising blocks 16, 17, and 18 which are configured to analyse available GPS bands and select the ones to be used for calculating ionospheric corrections. Since the combination of bands L1 and L5 for evaluating IFLC pseudo-range measurements leads to less noise amplification if compared with the combination of bands L1 and L2, a first checking block 16 is configured to check if the GPS band L5 is available. If the GPS band L5 is available, GPS bands L1 and L5 are used for the IFLC computation, and the first checking block 16 sends an enabling signal to a first dual frequency ionospheric correction block 19. If the GPS band L5 is not available, a second checking block 17 is enabled, which is configured to check if the GPS band L2 is instead available. If the GPS band L2 is available, GPS bands L1 and L2 are used for the IFLC computation, and the second checking block 17 sends an enabling signal to a second dual frequency ionospheric correction block 20. If the GPS band L2 is not available, a discarding block 18 is enabled, which is configured to discard the satellite k, then returning control to the first checking block 16, which is configured to proceed to the evaluation of the next satellite, e.g., k+1. In addition, the ionospheric error correction calculator 15 comprises a second group of blocks comprising blocks 19 and 20, which are a first and a second dual frequency ionospheric correction block. The structure of these two blocks is the same since they perform the same operations, but a first dual frequency ionospheric correction block 19 is activated when the GPS band L5 is available, receiving as inputs a strength of the signal of the GPS band L1 $s^k$ and the pseudo-range measurements obtained from the GPS bands L1 and L5, $\rho_k^1$ and $\rho_k^5$. A second dual frequency ionospheric correction block 20 is instead activated when the GPS band L5 is not available and the GPS band L2 is available, receiving as inputs the strength of the signal of the GPS band L1 $s^k$ and the pseudo-range measurements obtained from the GPS bands

L1 and L2, $\rho_k^1$ and $\rho_k^2$. Each of the blocks 19 and 20 is configured to calculate and supply as their respective outputs the ionospheric error correction values for all the three GPS bands L1, L2 and L5, $\hat{\imath}_1^k, \hat{\imath}_2^k$, and $\hat{\imath}_5^k$. A switch 40 couples the output of block 15 with either output of blocks 19 or 20 depending on which band, L5 or L2 is available, i.e., on the response of checking blocks 16, 17. Then, the ionospheric error correction values $\hat{\imath}_1^k, \hat{\imath}_2^k$, and $\hat{\imath}_5^k$ are forwarded to the measurement correction block 13' as previously described.

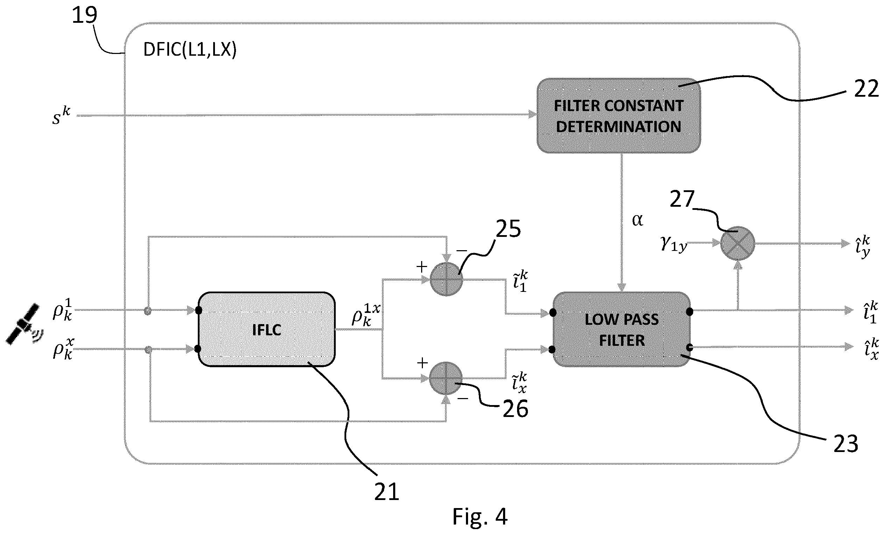

In figure 4 the schematic structure of a first and a second dual frequency ionospheric correction block, 19 and 20, is shown in detail. In the following description, a first dual frequency ionospheric correction block 19 will be described which exploits GPS bands L1 and L5. For the sake of conciseness, the description of the second dual frequency ionospheric correction block 20 is not provided in all of its details since the description of block 19 is still applicable for block 20, all the operations and building blocks being the same. In particular, the detailed description of such second dual frequency ionospheric correction block 20 can be easily obtained by an expert in the field by simply substituting the GPS band L5 in the description here provided with the GPS band L2. Thus, the first dual frequency ionospheric correction block 19 is configured to perform a first operation, represented by an IFLC block 21, which receives as input the two pseudo-range measurements obtained from GPS bands L1 and L5, $\rho_k^1$ and $\rho_k^5$ , and it is configured to compute resulting IFLC pseudo-range measurement $\rho_k^{15}$ . Subsequently, the pseudo-range measurements $\rho_k^1$ and $\rho_k^5$ are brought to respective subtraction blocks 25 and 26 where are subtracted, from the IFLC pseudo-range measurement

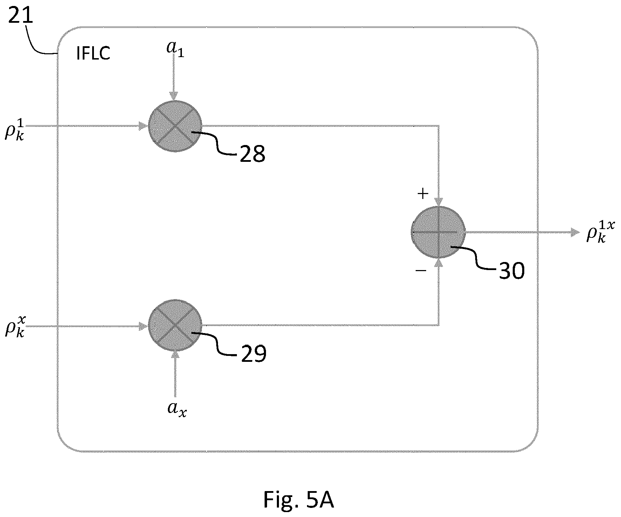

$\rho_k^{15}$ which is brought to the other input of each subtraction block 25 or 26, to obtain at the respective outputs of blocks 25, 26, the raw ionospheric errors $\tilde{\imath}_1^k$ and $\tilde{\imath}_5^k$ , which are given as input to a third block, a low pass filter block 23. A filter constant determination block 22 is configured to perform a second operation, receiving as input the strength of the signal of the GPS band L1 $s^k$ and providing as output a low pass filter constant $\alpha$, which is then given as input to the low pass filter block 23. The low pass filter block 23 receives the raw ionospheric errors $\tilde{\imath}_1^k$ and $\tilde{\imath}_5^k$ and the low pass filter constant $\alpha$ and, based on the value of the filter constant $\alpha$, it is configured to calculate and provide as output the filtered ionospheric error correction values $\hat{\imath}_1^k$ and $\hat{\imath}_5^k$ . An additional ionospheric error correction value $\hat{\imath}_2^k$ , corre-sponding to the GPS band L2, not used by block 19, is derived by the ionospheric error correction value corresponding to the GPS band L1 $\hat{\imath}_1^k$ through a carrier scaling factor $\gamma_{12}$ obtained by the literature. In particular, the additional ionospheric error correction value corresponding to the GPS band L2 $\hat{\imath}_2^k$ is obtained by multiplying, in a multiplication block 27, the scaling factor $\gamma_{12}$ obtained by the literature, which has a value of 1.6469, and the ionospheric error correction value corresponding to the GPS band L1 $\hat{\imath}_1^k$ . Similarly, for the second dual frequency ionospheric correction block 20, the additional ionospheric error correction value corresponding to the GPS band L5 $\hat{\imath}_5^k$ is obtained by multiplying, in a multiplication block 27, the scaling factor $\gamma_{15}$ given by the literature, which has a value of 1.7933, and the ionospheric error correction value corresponding to the GPS band L1 $\hat{\imath}_1^k$ . More in general, these scaling factors are indicated herein as $\gamma_{1y}$ with $y$ which can be either 5 or 2 based on the not selected GPS band. In figure 5A the schematic structure of an IFLC block 21 is shown in detail. Iono-Free Linear combination, as described before, is a technique relying on the fusion of two pseudo-range measurements derived by two GNSS signals transmitted by the same satellite, exploiting the fact that transmission speeds in ionized environment are different for signals with different carriers. An IFLC, or ionospheric free, pseudo-range $\rho_k^{15}$ or $\rho_k^{12}$ , or more in general $\rho_k^{1x}$ with $x$ which can be either 5 or 2 based on the considered GPS band (respectively band L5 or L2) in the exemplary embodiment, according to the IFLC operation, using the two carriers, is calculated as

$$\rho_k^{1x} = \frac{1}{f_1^2 - f_x^2}\left(f_1^2\rho_k^1 - f_x^2\rho_k^x\right) = a_1\,\rho_k^1 - a_x\,\rho_k^x$$

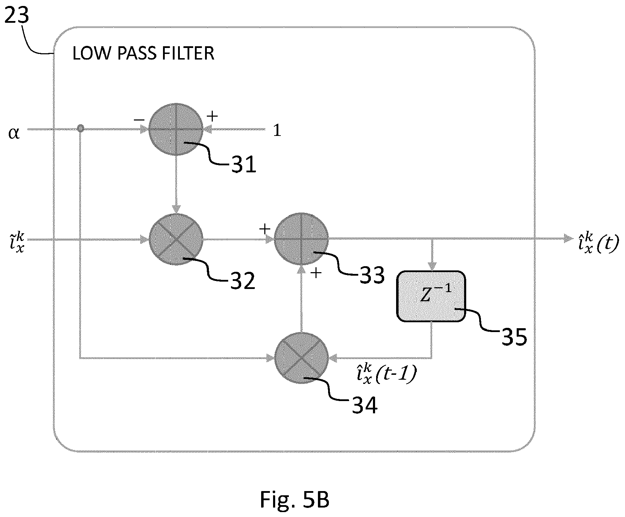

with $a_1 = \dfrac{f_1^2}{f_1^2 - f_x^2}$ and $a_x = \dfrac{f_x^2}{f_1^2 - f_x^2}$ where $f_1$ is the GPS L1 carrier frequency at 1575.42 MHz, and $f_x$ can be both $f_5$, the GPS L5 carrier frequency at 1176.45 MHz, or $f_2$, the GPS L2 carrier frequency at 1227.6 MHz. The IFLC block 21 receives as inputs the values $\rho_k^1$ and $\rho_k^x$ , and it is configured to multiply, in a multiplicative block 28, a first input value $\rho_k^1$ by a first constant $a_1$ , and, in a multiplicative block 29, a second input value $\rho_k^x$ by a second constant $a_x$ . Then, the output of such multiplicative blocks 28 and 29 is provided as input to a subtractive block 30, which is configured to subtract from the output of multiplicative block 28 the one of multiplicative block 29. The result of the subtraction obtained from the operation implemented by block 30 is the ionospheric free pseudo-range $\rho_k^{1x}$ which is then provided as output of the IFLC block 21. The IFLC pseudo-range measurements $\rho_k^{15}$ and $\rho_k^{12}$ are free from any bias related to ionospheric delay, and they are evaluated as a combination of a first pseudo-range measurement which is the GPS main carrier band L1 and a second pseudo-range measurement which can be one of either GPS secondary signal bands L2 or L5. Since coefficients $a_1$ and $a_x$ are both greater than one, even if the ionospheric error is removed, the noise is amplified and, by substituting the values of the GPS frequencies within the formula of coefficients $a_1$ and $a_x$ , it yields that the combination between bands L1 and L5 provides smaller coefficients hence less noise amplification in respect to the combination between bands L1 and L2. In figure 5B the schematic structure of a low pass filter block 23 used in one or more embodiments is shown in detail. As a result of the previous operations on the pseudo-range measurements previously described in details, the raw ionospheric errors $\tilde{\iota}_1^k, \tilde{\iota}_2^k$ , or $\tilde{\iota}_5^k$ are unbiased but noisy, due to the dependency on both IFLC and pseudo-range measurement native noises. Since the raw ionospheric errors, differently from both IFLC and native pseudo-range measurements which are varying fast, evolve slowly with time, it is possible to filter out the noise to obtain more precise ionospheric error correction values. In one or more embodiments, in order to smooth noise out, a classic IIR low pass filter may be used, whose outputs are the filtered ionospheric error correction values $\hat{\iota}_1^k, \hat{\iota}_2^k$ , and $\hat{\iota}_5^k$ obtained as

$$\hat{\iota}_1^k(t) = \alpha\hat{\iota}_1^k(t-1) + (1-\alpha)\tilde{\iota}_1^k(t)$$

$$\hat{\iota}_2^k(t) = \alpha\hat{\iota}_2^k(t-1) + (1-\alpha)\tilde{\iota}_2^k(t)$$

$$\hat{\iota}_5^k(t) = \alpha\hat{\iota}_5^k(t-1) + (1-\alpha)\tilde{\iota}_5^k(t)$$

where the filter constant $\alpha$ determines filter convergence time and noise reduction effectiveness. The noise-removing filtering used in an embodiment is a low pass filtering implemented in a filtering block 23. The filtering block 23 receives as inputs the filter constant $\alpha$, and the raw ionospheric error correction values $\tilde{\iota}_1^k, \tilde{\iota}_2^k$ , and $\tilde{\iota}_5^k$ . For the sake of conciseness, in Figure 5B it is shown the schematic structure of a low pass filtering of one of the three raw ionospheric error correction components since the other two can be obtained by using the same structure, changing the $\tilde{\iota}_x^k$ values provided as input to the filtering block 23. In the filtering block 23, a subtractive block 31 is configured to subtract the value of the filter constant $\alpha$ from the constant value 1. The output value of the subtractive block 31 is provided as input to a first multiplicative block 32, which is configured to multiply the received value for the raw ionospheric error value $\tilde{\iota}_x^k$ obtained as input. The output of such first multiplicative block 32 is then provided as input to a summing block 33. The summing block 33 is configured to sum the output of the first and the second multiplicative blocks, respectively 32 and 34, and it is configured to provide as output the result of the sum both to a block 35 and as output of the filtering block 23. Block 35, which implements a $z^{-1}$ delay function, is configured to sample the value at its input and to provide such value to the second multiplicative block 34, delayed of a sampling time (i.e., t-1). The second multiplicative block 34 is configured to multiply the value received from block 35 for the filter constant $\alpha$ received as input and to provide the result of the multiplication to the summing block 33.

In variant embodiments, the low pass filter may be obtained by other low pass filter configuration, for instance a FIR may be used, or also a Kalman Filter can be configured to operate as a low pass filter.

In one or more embodiments, the filter constant $\alpha$ can be obtained as a function of the strength, i.e., the quality, of the GPS band L1 $s^k$. In another one or more embodiments, the filter constant $\alpha$ can be obtained considering even the strength, i.e., the quality, of the GPS bands L2 or L5. In particular, in one or more embodiments, in the signal strength ranges are identified a range of higher values and a range of lower values, lower than such higher values, such function yielding higher values of such low pass filter constant $\alpha$ when the signal strength lies in the range of higher values and yield lower values, lower than such higher values, when the signal strength lies in the range of lower values. Hence, a measurement with weak signal yields a low or even zero filter constant $\alpha$, so the estimated ionospheric error correction values remain unchanged, and a measurement with strong signal, deemed more reliable and less prone to reflections, yields a high filter constant, so that the effect on the estimated ionospheric error correction values is more relevant. In one embodiment, the filter constant $\alpha$ may be calculated as a function of the signal strength $s^k$ through the scaling of a sigmoid function, i.e.,

$$\alpha = \frac{1}{1 + e^{ws+b}}$$

Thus, the solution here described refers in general to a method for performing a correction of a ionospheric error affecting pseudo-ranges measurements in a GNSS receiver 100 receiving a plurality of satellite signals, such as $s_0,...,s_{NS-1}$ from a plurality of satellites $S_0$-$S_{NS-1}$ of a constellation of satellites,

comprising in a navigation processing procedure performed at a GNSS receiver 100,

receiving pseudo range measurements, e.g., $\rho_k^1, \rho_k^2, \rho_k^5$ , previously calculated by such GNSS receiver 100, obtained from a plurality of carrier signals, e.g., L1, L2, L5, in such satellite signals $s_0,...,s_{NS-1}$,

performing a correction procedure of such pseudo-range measurements $\rho_k^1, \rho_k^2, \rho_k^5$ , by

calculating 15 ionospheric error correction values, e.g., $\hat{\imath}_1^k, \hat{\imath}_2^k, \hat{\imath}_5^k$ for such pseudo-range measurements $\rho_k^1, \rho_k^2, \rho_k^5$ outputting such ionospheric error correction values $\hat{\imath}_1^k, \hat{\imath}_2^k, \hat{\imath}_5^k$ on the basis of such pseudo-range measurements $\rho_k^1, \rho_k^2, \rho_k^5$ ,

compensating 13' such pseudo-range measurements $\rho_k^1, \rho_k^2, \rho_k^5$ , for predictable errors, e.g., $c_k^1, c_k^2, c_k^5$ and for ionospheric error correction values $\hat{\imath}_1^k, \hat{\imath}_2^k, \hat{\imath}_5^k$ obtaining corrected pseudo-ranges $\rho_k^1, \rho_k^2, \rho_k^5$ and performing a position calculation operation, e.g., in blocks 11, 14', processing such corrected pseudo-range measurements $\rho_k^1, \rho_k^2, \rho_k^5$ and outputting position, velocity and time information PVT of the GNSS receiver 100,

wherein

such calculating 15 ionospheric error correction values $\hat{\imath}_1^k, \hat{\imath}_2^k, \hat{\imath}_5^k$ for such pseudo-range measurements $\rho_k^1, \rho_k^2, \rho_k^5$ ,

comprises

performing 21 a Ionosphere Free Linear Combination on a pair of such pseudo-ranges measurements, e.g. $\rho_k^1, \rho_k^5$ or $\rho_k^1, \rho_k^2$ , obtaining a Ionospheric Free Linear Combination pseudo-range measurement, e.g., $\rho_k^{15}$ or $\rho_k^{12}$ ,

obtaining a pair of raw ionospheric error correction values, e.g., $\tilde{\imath}_1^k, \tilde{\imath}_5^k; \tilde{\imath}_1^k, \tilde{\imath}_2^k$ , which are result of respective subtraction operations, e.g., in blocks 25 and 26, in each of which subtraction a respective of such pseudo-ranges measurements, $\rho_k^1, \rho_k^5$ or $\rho_k^1, \rho_k^2$, is subtracted from such Ionospheric Free Linear Combination pseudo-range measurement $\rho_k^{15}, \rho_k^{12}$,

performing a noise-removing filtering 23 of such raw ionospheric error correction values, $\tilde{i}_1^k, \tilde{i}_5^k; \tilde{i}_1^k, \tilde{i}_2^k$ obtaining such ionospheric error correction values $\hat{i}_1^k, \hat{i}_2^k, \hat{i}_5^k$ input of such operation of compensating, e.g., 13', such pseudo-range measurements $\rho_k^1, \rho_k^2, \rho_k^5$.

As indicated, in an embodiment, such noise-removing filtering, is a low pass filtering, e.g., filter 23, and comprises calculating 22 a low pass filter constant $\alpha$ as a function of the signal strength $s^k$. In this way it is determined the extent of the noise-removing filtering on the basis of the signal strength.

In an embodiment, such low pass filtering 23 is an infinite impulse response IIR filtering. As indicated, it is defined by the classic equations

$$\hat{i}_1^k(t) = \alpha \hat{i}_1^k(t-1) + (1-\alpha)\tilde{i}_1^k(t)$$

$$\hat{i}_2^k(t) = \alpha \hat{i}_2^k(t-1) + (1-\alpha)\tilde{i}_2^k(t)$$

$$\hat{i}_5^k(t) = \alpha \hat{i}_5^k(t-1) + (1-\alpha)\tilde{i}_5^k(t)$$

where $\hat{i}_1^k, \hat{i}_2^k$, and $\hat{i}_5^k$ are such ionospheric error correction values and $\alpha$ is a low pass filter constant.

In another embodiment, to evaluate the low pass filter constant $\alpha$, different signal strength ranges are considered and among the signal strength ranges are identified a range of higher values and a range of lower values, lower than such higher values, such function yielding higher values of such low pass filter constant $\alpha$ when the signal strength lies in the range of higher values and yield lower values, lower than such higher values, when the signal strength lies in the range of lower values.

Moreover, in some of these embodiments, such low pass filter constant $\alpha$ is calculated 22 as a function of the GPS band L1 strength $s^k$ through the scaling of a sigmoid function. This may be, for instance,

$$\alpha = \frac{1}{1 + e^{ws+b}}$$

In one or more embodiments, during the step for calculating 15 such ionospheric error correction values $\hat{i}_1^k, \hat{i}_2^k$, and $\hat{i}_5^k$, at least two carrier signals, e.g. corresponding to bands L1, L5 or L1, L2, corresponding to a first band, e.g. L1, and a second band, e.g. L5 or L2, are selected in such plurality of carrier signals as set of carrier signals from which identify the pair of pseudo-ranges measurements, e.g., $\rho_k^1, \rho_k^5$ or $\rho_k^1, \rho_k^2$, i.e., the measurement that are used to calculate the Ionospheric Free Linear Combination pseudo-range measurement, e.g., $\rho_k^{15}$ or $\rho_k^{12}$. As mentioned two carrier signals are needed to calculate a IFLC combination pseudo-range measurement, although in the embodiment described previously such two carrier signals are selected among three, L1, L2, L5,

The GPS band L1 is preferably selected as first frequency, since it is broadcasted by all the satellites, then preferably the GPS band L5 is selected as second frequency to reduce the noise in the IFLC calculation.

Also, the method may, as in the example, select as such at least two signals at least three carrier signals, e.g. L1, L2, L5, in such set of carrier signals, identifying a first, e.g. L1, and a second signal, e.g. L5, among such three carriers signals, e.g., L1, L2, L5, as pair of signal to obtain such pair of such pseudo-ranges measurements, $\rho_k^1, \rho_k^5$ ; $\rho_k^1, \rho_k^2$ , and a third carrier signal e.g. L2, and further comprises the following sequence of operations 16, 17, 18:

if the second carrier signal L5 is available, the first carrier signal L1 and the second carrier signal L5 are selected as pair of carrier signals (operation 16),
if the second carrier signal is not available and a third carrier signal corresponding to a third band, L2, is available the first carrier signal L1 and the third carrier signal L2 are selected as pair (operation 17)
if the third, L2, and second, L5, carrier signal are not available, the corresponding satellite is discarded (operation 18).

Thus, in the example, case the GPS band L5 is not available, the GPS band L2 is alternatively selected as second frequency. This such selection is accomplished by a first group of sub-blocks comprising blocks 16, 17, and 18 of block 15 which are designed to analyse available GPS bands and select the ones to be used for calculating ionospheric corrections. In particular, such group of sub-blocks comprising block 16, 17 and 18 performs the following sequence of operations

if GPS band L5 is available 16, L1 and L5 are the bands selected,
if GPS band L5 is not available and GPS band L2 is available 17, L1 and L5 are the bands selected,
if GPS bands L2 and L5 are not available 18, corresponding satellite will be discarded.

As mentioned above, the method may apply a criterion to identify the pair of bands/pseudorange-measurements either to directly calculate the IFLC combination pseudo-range measurement or from which start the selection of the pair according to the band availability described just here above. Thus, the method may comprise selecting as the carrier signals, e.g. L1, L5, or L1, L2, which identify such pair of such pseudo-ranges measurements, e.g., $\rho_k^1, \rho_k^5$ ; $\rho_k^1, \rho_k^2$ , the pseudo-ranges measurements corresponding to the signal carriers, e.g., L1, L5, L2, that determine the lower noise amplification value in evaluating IFLC pseudo-range measurements.

As mentioned, preferably, the ionospheric error correction values, are estimated for at least three signal carriers corresponding to three bands, in the example, L1, L2, L5, which in particular are GPS bands. Clearly other bands, in particularly of other GNSS systems can be selected.

In one or more embodiments, regardless only two frequencies being selected as the pair which is used for calculating the IFLC pseudo-range measurements, calculating then the corresponding ionospheric error correction values, e.g., $\hat{i}_1^k, \hat{i}_2^k$ , the solution described herein may be able to estimate as well such ionospheric error correction values $\hat{i}_1^k, \hat{i}_2^k$ , and $\hat{i}_5^k$ for all the three signal GPS bands L1, L2 and L5. To achieve that, such ionospheric error correction values $\hat{i}_1^k, \hat{i}_2^k$ or $\hat{i}_5^k$ corresponding to the two selected GPS bands L1, L2 or L5 are obtained as output of the low pass filter 23, and such ionospheric error correction value $\hat{i}_2^k$ or $\hat{i}_5^k$ corresponding to the not selected GPS band L2 or L5 is derived by the ionospheric error correction value corresponding to the GPS band L1 $\hat{i}_1^k$ through the corresponding carrier scaling factor $\gamma_{12}$ or $\gamma_{15}$ .

Thus, the method also comprise obtaining such ionospheric error correction values, e.g., $\hat{i}_1^k, \hat{i}_5^k$ ; $\hat{i}_1^k, \hat{i}_2^k$ corresponding to the two selected carrier signals, e.g., L1, L5; L1, L2, are obtained as output of the low pass filter, e.g., 23, and such ionospheric error correction value, e.g., $\hat{i}_2^k$ ; $\hat{i}_5^k$ corresponding to the not selected carrier signals, e.g., L2; L5 is derived by the ionospheric error correction value corresponding to the first carrier signals, e.g., L1, $\hat{i}_1^k$ through the corresponding carrier scaling factor, e.g., $\gamma_{12}$ ; $\gamma_{15}$ .

As mentioned, preferably, the ionospheric error correction values, are estimated for at least three signal carriers corresponding to three bands, in the example, L1 (or L1C), L2 (i.e., L2C), and L5, which in particular are GPS bands. Clearly other bands, in particularly of other GNSS systems can be selected, for instance bands E (e.g., E1, E5b, E5a, and E6b) of the Galileo system, bands G (e.g., G1, and G2) in GLONASS system, bands B (e.g., B1I or B1C, B2I or B2b or B3I, and B2a) in Beidou system, and bands L (e.g., L1 or L1C, L2C, L5, and L6) in QZSS system.

The solution described herein, although it has been described with reference to only three bands, L1, L2, L5, may also be applied to four bands, or in general to a greater number of bands, starting from the bands, in the example above L1 and L5, which, due to the value of carrier, has a lower amplification factor, i.e., hence less noise amplification in respect to the combination between bands.

In embodiments, the pseudo range measurements $\rho_k^1, \rho_k^2, \rho_k^5$ calculated by the GNSS receiver 100 are obtained from a plurality of carrier signals in satellite signals $s_0,...,s_{NS-1}$ comprising GPS band L1 and GPS bands L5 and/or L2.

In embodiments, a GNSS receiver apparatus may be configured to perform the method describe in the above embodiments, in particular in the receiver module performing the ionospheric corrections.

In embodiments, a computer program product directly loadable into the internal memory of a digital computer, may comprise software code portions for performing the steps of the method described in the above embodiments.

The solutions disclosed herein have thus significant advantages with respect to the known solutions.

Advantageously the solution here described represents a compensation approach for the position error caused by ionosphere which is independent from user location and which can eliminate 100% of the ionospheric errors.

The solution here described represents a compensation which is also real time, and hence can cope with sudden or unpredicted solar activity behaviour that could not be managed by standard compensation approaches (Klobuchar, SBAS) and, differently from the standard IFLC approach, it does not introduce additional noise when the solar activity operates in normal conditions.

The solution here described, exploits IFLC for the evaluation of the ionospheric error thus taking advantage of this technique being free from any ionospheric effect, but then is able to reduce the noise contribution to obtain a more precise PVT solution compared to the state-of-the-art solutions. This reduction is achieved through the evaluation of raw ionospheric errors, which change slowly with time, which are then filtered using a noise-removing filtering, in particular a low pass filtering, to reduce the noise introduced by the combination of pseudo-range measurements in the IFLC calculation.

The low pass filtering developed in the herein described solution comprises the calculation of a low pass filter constant whose value is expressed as a function of the signal strength. In this way, the effectiveness of the filtering on the resulting ionospheric errors is weighted according to the strength, and, as a consequence, to the quality of the signal received.

In addition, since corrections are applied on all the available measurements among the three pseudo-range ones obtained from the different GPS bands L1, L2 and L5, the satellite redundancy and dilution of precision is comparable with the state-of-the-art solutions using Klobuchar/Nequick models and SBAS. Indeed, the solution described, for instance, with respect to the SBAS, which usually does not provide corrections for all the available constellations, may obtain a better availability and dilution of precision.

Of course, without prejudice to the principle of the invention, the details of construction and the embodiments may vary widely with respect to what has been described and illustrated herein purely by way of example, without thereby departing from the scope of the present invention, as defined by the ensuing claims.

## Claims

1. Method for performing a correction of a ionospheric error affecting pseudo-ranges measurements in a GNSS receiver (100) receiving a plurality of satellite signals ($s_0,...,s_{NS-1}$) from a plurality of satellites ($S_0$-$S_{NS-1}$) of a constellation of satellites,

   comprising in a navigation processing procedure performed at a GNSS receiver (100),

   receiving pseudo range measurements ( $\rho_k^1, \rho_k^2, \rho_k^5$ ) previously calculated by said GNSS receiver (100), obtained from a plurality of carrier signals (L1, L2, L5) in said satellite signals ($s_0,...,s_{NS-1}$),

   performing a correction procedure of said pseudo-range measurements ( $\rho_k^1, \rho_k^2, \rho_k^5$ ), by

   calculating (15) ionospheric error correction values ( $\hat{\imath}_1^k, \hat{\imath}_2^k, \hat{\imath}_5^k$ ) for said pseudo-range measurements ( $\rho_k^1, \rho_k^2, \rho_k^5$ ) outputting said ionospheric error correction values ( $\hat{\imath}_1^k, \hat{\imath}_2^k, \hat{\imath}_5^k$ ) on the basis of said

pseudo-range measurements ( $\rho_k^1$ , $\rho_k^2$, $\rho_k^5$ ),

compensating (13') said pseudo-range measurements ( $\rho_k^1$, $\rho_k^2$, $\rho_k^5$ ) for predictable errors ( $c_k^1$ ) and for ionospheric error correction values ( $\hat{\iota}_1^k$, $\hat{\iota}_2^k$, $\hat{\iota}_5^k$ ) obtaining corrected pseudo-ranges ( $\rho_k^1, \rho_k^2, \rho_k^5$ ) and

performing a position calculation operation (11, 14') processing said corrected pseudo-range measurements ( $\rho_k^1$, $\rho_k^2$, $\rho_k^5$ ) and outputting position, velocity and time information (PVT) of the GNSS receiver (100),

wherein

said calculating (15) ionospheric error correction values ( $\hat{\iota}_1^k$, $\hat{\iota}_2^k$, $\hat{\iota}_5^k$ ) for said pseudo-range measurements ( $\rho_k^1, \rho_k^2, \rho_k^5$ ),
comprises

performing (21) a Ionosphere Free Linear Combination on a pair of said pseudo-ranges measurements ( $\rho_k^1, \rho_k^5$; $\rho_k^1, \rho_k^2$ ) obtaining a Ionospheric Free Linear Combination pseudo-range measurement ( $\rho_k^{15}$; $\rho_k^{12}$ ),

obtaining a pair of raw ionospheric error correction values ( $\tilde{\iota}_1^k$, $\tilde{\iota}_5^k$ ; $\tilde{\iota}_1^k$, $\tilde{\iota}_2^k$ ), which are result of respective subtraction operations (25, 26), in each of which subtraction a respective of said pseudo-ranges measurements ( $\rho_k^1, \rho_k^5$ ; $\rho_k^1, \rho_k^2$ ) is subtracted from said Ionospheric Free Linear Combination pseudo-range measurement ( $\rho_k^{15}$ ; $\rho_k^{12}$ ),

performing a noise-removing filtering (23) of said raw ionospheric error correction values ( $\tilde{\iota}_1^k$, $\tilde{\iota}_5^k$ ; $\tilde{\iota}_1^k$, $\tilde{\iota}_2^k$ ) obtaining said ionospheric error correction values ( $\hat{\iota}_1^k, \hat{\iota}_2^k, \hat{\iota}_5^k$ ) input of said operation of compensating (13') said pseudo-range measurements ( $\rho_k^1, \rho_k^2, \rho_k^5$ ).

2. A method according to claim 1 wherein said noise-removing filtering (23) is a low pass filtering, and comprises calculating (22) a low pass filter constant ($\alpha$) as a function of the signal strength ($s^k$).

3. A method according to claim 2 wherein said low pass filtering (23) is obtained by an infinite impulse response filtering.

4. A method according to claim 2 or 3 wherein in the signal ($s_0,...,s_{NS-1}$) strength ranges are identified a range of higher values and a range of lower values, lower than said higher values, said function yielding higher values of said low pass filter constant ($\alpha$) when the signal strength lies in the range of higher values and yield lower values, lower than said higher values, when the signal strength lies in the range of lower values.

5. A method according to claim 4 wherein said low pass filter constant ($\alpha$) is calculated (22) as a function of the signal strength ($s^k$) through the scaling of a sigmoid function.

6. A method according to any of the previous claims, wherein during the step for calculating (15) said ionospheric error correction values ( $\hat{\iota}_1^k$, $\hat{\iota}_2^k$, $\hat{\iota}_5^k$ ), at least two carrier signals (L1, L5; L1, L2) corresponding to a first band (L1) and a second band (L5;L2), are selected in said plurality of carrier signals (L1, L2, L5) as set of carrier signals from which identify said pair of said pseudo-ranges measurements ( $\rho_k^1, \rho_k^5; \ \rho_k^1, \rho_k^2$ ).

7. A method according to claim 6, wherein said selecting at least two signals (L1, L5; L1, L2) in said plurality of carrier signals (L1, L5) comprises selecting at least three carrier signals (L1, L2, L5) in said set of carrier signals (L1, L2, L5) identifying a first (L1) and a second signal (L5) among said three carriers signals (L1, L2, L5) as pair of signals to obtain said pair of said pseudo-ranges measurements ( $\rho_k^1, \rho_k^5$ ; $\rho_k^1, \rho_k^2$ ), and a third carrier signal (L2), and further comprises the following sequence of operations (16, 17, 18):

if the second carrier signal (L5) is available (16), the first carrier signal (L1) and the second carrier signal (L5) are selected as pair of carrier signals,
if the second carrier signal is not available and a third carrier signal corresponding to a third band (L2) is available (17), the first carrier signal (L1) and the third carrier signal (L2) are selected as pair
if the third (L2) and second (L5) carrier signal are not available (18), the corresponding satellite is discarded.

8. A method according to claim 6 or 7 comprising selecting as the carrier signals (L1, L5; L1, L2) which identify said pair of said pseudo-ranges measurements ( $\rho_k^1, \rho_k^5$ ; $\rho_k^1, \rho_k^2$ ) the pseudo-ranges measurements corresponding to the signal carriers (L1, L5, L2) that determine the lower noise amplification value in evaluating IFLC pseudo-range measurements.

9. A method according to claim 6 or 7 or 8 wherein said ionospheric error correction values ( $\hat{\iota}_1^k, \hat{\iota}_2^k, \hat{\iota}_5^k$ ) are estimated for at least three signal carriers corresponding to three bands (L1, L2, L5), in particular GPS bands.

10. A method according to claim 9 wherein

said ionospheric error correction values ( $\hat{\iota}_1^k, \hat{\iota}_5^k$ ; $\hat{\iota}_1^k, \hat{\iota}_2^k$ ) corresponding to the two selected carrier signals (L1, L5; L1, L2) are obtained as output of the low pass filter (23), and
said ionospheric error correction value ( $\hat{\iota}_2^k$ ; $\hat{\iota}_5^k$ ) corresponding to the not selected carrier signals (L2; L5) is derived by the ionospheric error correction value corresponding to the first carrier signals (L1) ( $\hat{\iota}_1^k$ ) through the corresponding carrier scaling factor ( $\gamma_{12}$ ; $\gamma_{15}$ ).

11. A method according any of claims 6 to 10 wherein said at least two signals in said plurality of carrier signals (L1, L5) selected comprise more than three carrier signals.

12. A method according any of the preceding claims, wherein in said receiving pseudo range measurements ( $\rho_k^1, \rho_k^2, \rho_k^5$ ) previously calculated by said GNSS receiver (100), obtained from a plurality of carrier signals (L1, L2, L5) in said satellite signals (s$_0$,...,s$_{NS-1}$), said satellite signals (s$_0$,...,s$_{NS-1}$) comprises GPS band L1 and GPS bands L5 and/or L2.

13. GNSS receiver apparatus configured to perform the method of any of claims 1 to 12.

14. Computer program product directly loadable into the internal memory of a digital computer, comprising software code portions for performing the steps of the method of any of claims 1 to 12.

Fig. 1

Fig. 2A

Fig. 2B

Fig. 3

Fig. 4

Fig. 5A

Fig. 5B

Europäisches
Patentamt

European
Patent Office

Office européen
des brevets

# EUROPEAN SEARCH REPORT

**Application Number**

EP 24 16 2459

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BASILE FRANCESCO ET AL: "Multi-frequency precise point positioning using GPS and Galileo data with smoothed ionospheric corrections", 2018 IEEE/ION POSITION, LOCATION AND NAVIGATION SYMPOSIUM (PLANS), IEEE, 23 April 2018 (2018-04-23), pages 1388-1398, XP033354094, DOI: 10.1109/PLANS.2018.8373531 | 1,6-14 | INV. G01S19/32 G01S19/40 |
| A | * figures 12-13 * * equations (4), (5), (11) * * sections: I. Introduction; V. Smoothed Ionospheric Corrections; VI. Conclusions. * ----- | 2-5 | |
| Y | SUPRAJA REDDY A ET AL: "Performance evaluation of single and dual frequency Carrier Smoothing techniques for LAAS", APPLIED ELECTROMAGNETICS CONFERENCE (AEMC), 2011 IEEE, IEEE, 18 December 2011 (2011-12-18), pages 1-4, XP032215236, DOI: 10.1109/AEMC.2011.6256914 ISBN: 978-1-4577-1098-8 | 1,6-14 | |
| A | * equations (10)-(12) * * sections: II. NavIC Constellation; III. Signal/Position Accuracy. * ----- | 2-5 | |

**TECHNICAL FIELDS SEARCHED (IPC)**

G01S

-/--

The present search report has been drawn up for all claims

| Place of search | Date of completion of the search | Examiner |
|---|---|---|
| Munich | 19 July 2024 | Tancredi, Urbano |

EPO FORM 1503 03.82 (P04C01)

## EUROPEAN SEARCH REPORT

Application Number

EP 24 16 2459

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | VASUDHA M P ET AL: "Comparative evaluation of IRNSS performance with special reference to positional accuracy", GYROSCOPY AND NAVIGATION, PLEIADES PUBLISHING, MOSCOW, vol. 8, no. 2, 19 May 2017 (2017-05-19), pages 136-149, XP036238663, ISSN: 2075-1087, DOI: 10.1134/S2075108717020109 [retrieved on 2017-05-19] | 1,6-14 | |
| A | * sections: I. Introduction; V. Results and Discussion. * ----- | 2-5 | |
| A | LIN ZHAO ET AL: "Novel adaptive Hatch filter to mitigate the effects of ionosphere and multipath on LAAS", CHINESE JOURNAL OF SYSTEMS ENGINEERING AND ELECTRONICS, SECOND ACADEMY MINISTRY OF AERO-SPACE INDUSTRY, BEIJING, CN, vol. 21, no. 6, 1 December 2010 (2010-12-01), pages 1046-1053, XP011377943, ISSN: 1004-4132, DOI: 10.3969/J.ISSN.1004-4132.2010.06.018 * equations (19)-(31) * * sections: 1. Introduction; 3. Adaptive Hatch filter for LAAS. * ----- | 1-14 | TECHNICAL FIELDS SEARCHED (IPC) |

-/--

The present search report has been drawn up for all claims

| Place of search | Date of completion of the search | Examiner |
|---|---|---|
| Munich | 19 July 2024 | Tancredi, Urbano |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 24 16 2459 |
| --- | --- | --- | --- |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | KIM EUIHO ET AL: "Adaptive Carrier Smoothing Using Code and Carrier Divergence", NTM 2007 - PROCEEDINGS OF THE 2007 NATIONAL TECHNICAL MEETING OF THE INSTITUTE OF NAVIGATION, THE INSTITUTE OF NAVIGATION, 8551 RIXLEW LANE SUITE 360 MANASSAS, VA 20109, USA, 24 January 2007 (2007-01-24), pages 141-152, XP056005054, * equations (14)-(25) * * sections: Introduction; Optimal Carrier Smoothing based n the Estimates of Slant Ionospheric Delay Rates and Multipath. * ----- | 1-14 | |
| | | | **TECHNICAL FIELDS SEARCHED (IPC)** |

The present search report has been drawn up for all claims

| Place of search | Date of completion of the search | Examiner |
| --- | --- | --- |
| Munich | 19 July 2024 | Tancredi, Urbano |

EPO FORM 1503 03.82 (P04C01)